# EUROPEAN PATENT SPECIFICATION

(11) **EP 1 307 060 B1**
(45) Date of publication and mention of the grant of the patent: **02.02.2005**
(21) Application number: 02023755.8
(22) Date of filing: 24.10.2002
(51) Int. Cl.: H04Q 7/22

(54) **Information acquisition system and information acquisition method**
System und Verfahren zur Informationserfassung
Système et procédé d'acquisition d'information

(30) Priority: 25.10.2001 JP 2001328012
(43) Date of publication of application: 02.05.2003
(73) Proprietor: NTT DoCoMo, Inc., Tokyo 100-6150 (JP)
(72) Inventor: Tosaki, Takashi, Int. Prop. Dept., 2-11-1, Nagatacho, Chiyoda-ku, Tokyo (JP); Kawaguchi, Fumiko, Int. Prop. Dept., 2-11-1, Nagatacho, Chiyoda-ku, Tokyo (JP); Sugiyama, Takeshi, Int. Prop. Dept., 2-11-1, Nagatacho, Chiyoda-ku, Tokyo (JP); Kaiyama, Akira, Int. Prop. Dept., 2-11-1, Nagatacho, Chiyoda-ku, Tokyo (JP); Sato, Atsushi, Int. Prop. Dept., 2-11-1, Nagatacho, Chiyoda-ku, Tokyo (JP)
(74) Representative: HOFFMANN - EITLE

(56) References cited:
- WO-A-01/30057
- WO-A-01/72078
- WO-A-98/52340
- US-A1- 2001 027 111

## Description

### CROSS REFERENCE TO RELATED APPLICATIONS

This application is based upon and claims the benefit of priority from the prior Japanese Patent Application No. P2001-328012, filed on 25 October; 2001, with the publication number JP 2003 132 178 A, and date of publication of May 9, 2003.

### BACKGROUND OF THE INVENTION

### 1. Field of the invention

The present invention is related to an information acquisition system and an information acquisition method for acquiring requested information through a communication network from communication devices which are used by the users of the communication network.

### 2. Description of the Related Art

There has been known a conventional practice in which an information acquisition client searches appropriate users of a communication network (information acquisition pollees) by a proprietary technique and independently acquires requested information such as answer data to a questionnaire from said users through the communication network.

In accordance with the conventional information acquisition systems, for example, an information acquisition client samples information acquisition pollees by selecting arbitrary telephone numbers having been used from a telephone directory and the like at random, and then places a telephone call to each sample in order to ask the information acquisition pollees to answer a questionnaire by the call.

Also, in accordance with the conventional information acquisition systems, it is necessary to confirm whether or not the speaker on the phone meets the requirements for an information acquisition pollee, while securing randomisation of the above sampling, and therefore to confirm information about the status of the speaker over the phone by an interview.

Furthermore, in the case of the conventional information acquisition systems such as for a public-opinion poll, a reward is sometimes offered to the respondent for answering. In such a case, the addresses of respondents are acquired in advance, followed by sending the reward separately.

However, since cooperation has not been established among telecommunications carriers and information acquisition clients in the case of the conventional information acquisition systems, there are shortcomings in that an information acquisition client has to acquire requested information at considerable costs in expenditure, time and effort.

This is because the phone response itself of each information acquisition pollees to the call is not guaranteed, while the information acquisition client has to place a telephone call to each arbitrary telephone number sampled, and therefore has to make unproductive efforts for such a call, sending unnecessary labour and time.

Furthermore, in the case of the conventional information acquisition systems, there are shortcomings in that considerable costs in time, effort and expenditure on communication and the like are required to guarantee the randomisation of the sampling and confirm the eligibility of the information acquisition pollees through interviews.

Still further, in the case of the conventional information acquisition systems, it is also a problem in that the reward entails a mailing cost.

WO 98/52340 discloses a method and device for interaction with a number of subscribers in a telecommunication network, which can be applied to a market survey. The target group of the subscribers is selected by predetermined criteria, such as age and/or residence, subsequently the subscribers are called and automatically interacted with. In case, upon contact with the subscriber, a machine-generated output, such as a modem or fax is detected, this subscriber is either deleted from the target group or noted as inaccessible.

Further, WO 01/72078 A1 discloses a method for ordering vehicles, such as taxis taxi through a mobile telecommunication system, wherein the taxis are provided with a mobile phone. In this method a client sends and a taxi center receives a digital order message, which directly or indirectly indicates the vehicle order address, upon which a taxi group is formed of taxis located near the order address and turn in the state of readiness.

### BRIEF SUMMARY OF THE INVENTION

It is therefore an object of the present invention to provide an information acquisition method and an information acquisition system enabling an information acquisition client to acquire requested information from information acquisition pollees without substantially increasing costs in time, effort and expenditure.

The object of the present invention is achieved by a information acquisition system and information acquisition method with the features of claims 1 and 5, respectively.

Further preferred embodiments of the present invention are described in the dependent claims.

### BRIEF DESCRIPTION OF THE SEVERAL VIEWS OF THE DRAWINGS

- Fig. 1: is a block diagram showing the configuration of an information acquisition system in accordance with an embodiment of the present invention.
- Fig. 2: is a block diagram showing the internal configuration of the information provider station of the information acquisition system in accordance with an embodiment of the present invention.
- Fig. 3: is a block diagram showing the internal configuration of the service control station of the information acquisition system in accordance with an embodiment of the present invention.
- Fig. 4: is a block diagram showing the internal configuration of the information storing device of the information acquisition system in accordance with an embodiment of the present invention.
- Fig.5: is a block diagram showing the internal configuration of the communication devices of the information acquisition system in accordance with an embodiment of the present invention.
- Fig.6: is a sequence diagram showing the operation of the information acquisition system in accordance with an embodiment of the present invention.

### DETAILED DESCRIPTION OF THE INVENTION

### (Configuration of The Information Acquisition System In Accordance With An Embodiment Of The Present Invention)

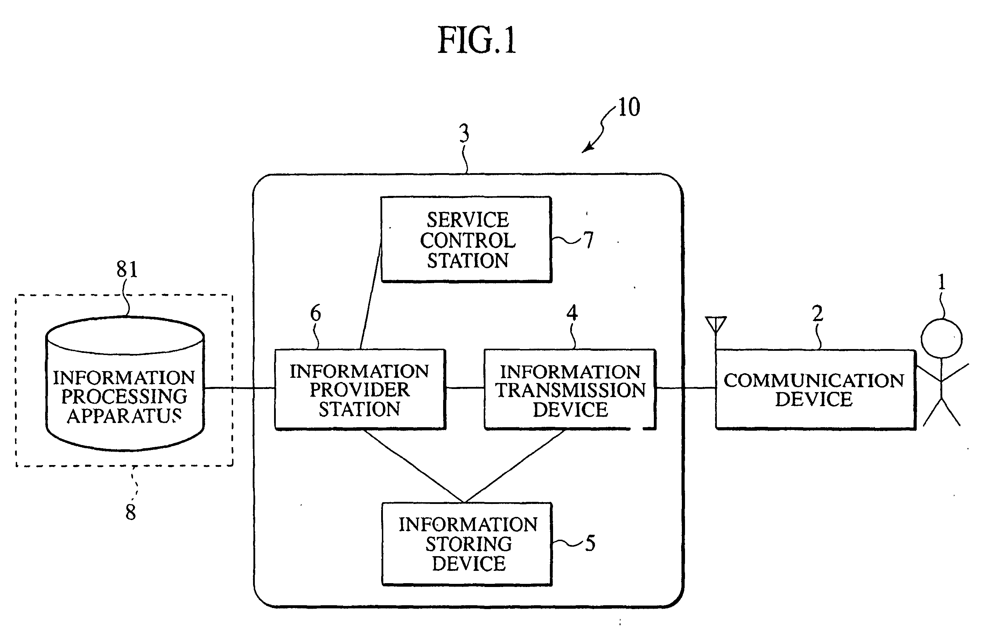

In the following explanation, the information acquisition system in accordance with an embodiment of the present invention will be described. Fig.1 is a schematic block diagram showing the configuration of the information acquisition system 10 in accordance with the present embodiment.

In the information acquisition system 10 in accordance with the present embodiment, requested information is acquired through a communication network 3 from communication devices 2 used by users 1 (only one user is illustrated in the figure for purposes of brevity) of the communication network 3 (information acquisition pollees) by means of an information processing apparatus 81 of an information acquisition client 8.

The information acquisition system in accordance with the present embodiment is composed of a communication device(s) 2, an information transmission device 4, an information storing device 5, an information provider station 6. a service control station 7 and an information processing apparatus 81 as illustrated in Fig.1.

In this case, located on the communication network 3 are the information transmission device 4, the information storing device 5. the information provider station 6 and the service control station 7. Meanwhile, the communication network 3 is a communication network implemented with a wireless/wired system and so forth, for example, a packet transfer communication networx, a circuit switching network, a PDC network, a PDC-packet transfer network, a W-CDMA network and so forth.

The information transmission device 4 serves to control data transmission and reception with the communication devices 2 used by the users 1 through the communication network 3. The information transmission device 4 is implemented, for example, with the base stations and the circuit switches of a mobile communication system. Also, the information transmission device 4 is connected to the information storing device 5 and the information provider station 6 through the communication network 3.

More specifically, the information transmission device 4 serves to transfer the data required for acquiring information to the communication device 2 of each user 1 selected by the use of a calling number which is detected by the service control station 7.

On the other hand, the information provider station 6 is used by a telecommunications carrier and serves to receive information acquisition requests from the information acquisition client 8 for requested information such as answer data to a questionnaire. In this case, the information acquisition request may be transferred by data transmission and reception through the Internet, by a telephone, by a facsimile, by written material or the like.

Also, the information provider station 6 serves to provide, for the information processing apparatus 81 of the information acquisition client 8, requested information such as answer data to a questionnaire compiled from the communication devices 2 of a plurality of users (information acquisition pollees) 1.

In this case, the compilation described above includes processing that an operator of the telecommunications carrier extracts requested information items from the information (for example, answer data to a questionnaire and so forth) acquired from the communication devices 2, sorts said information items, unifies terms used in said information items, and the like processing.

Also. the information provider station 6 is connected to the information transmission device 4, the information storing device 5 and the service control station 7 through the communication network 3 to exchange data with them.

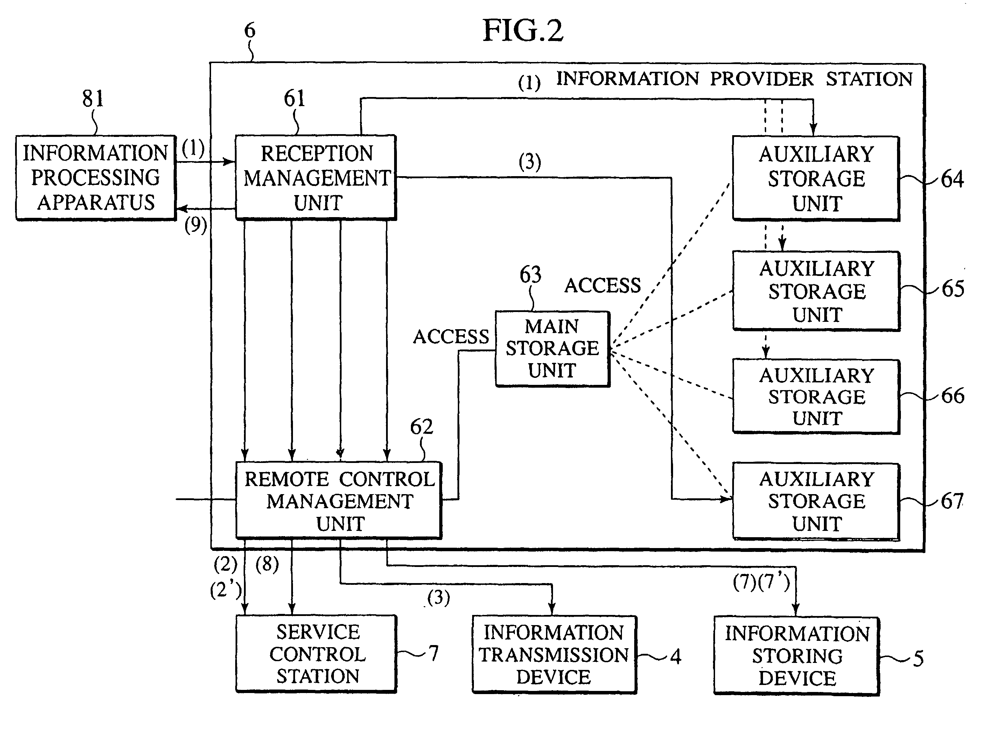

More specifically, as illustrated in Fig.2, the information provider station 6 is composed of a reception management unit 61, a remote control management unit 62, a main storage unit 63 and an auxiliary storage units 64 to 67.

The reception management unit 61 serves to manage the remote control management unit 62, the main storage unit 63 and the auxiliary storage units 64 to 67.

Also, the reception management unit 61 serves to receive an information acquisition request from the information processing apparatus 81.

Furthermore, the reception management unit 61 serves to write the respective information items acquired from the information processing apparatus 81 to the auxiliary storage units 64 to 67.

Still further, the reception management unit 61 serves to read information from the auxiliary storage units 64 to 67 when necessary, and to transmit requested information to the remote control management unit 62.

Still further, the reception management unit 61 serves to manage the initialization and the termination of information acquisition processing.

More specifically, the reception management unit 61 periodically accesses period information stored in the auxiliary storage unit 64 in order to perform the respective steps of the information acquisition processing on the communication network 3 when a predetermined period starts in accordance with said period information.

Still further, after completion of the information acquisition processing, the reception management unit 61 transfers the requested information compiled from the communication devices 2 of a plurality of the users (information acquisition pollees) 1 to the information processing apparatus 81.

The remote control management unit 62 serves to manage the remote control of the information transmission device 4. the information storing device 5 and the service control station 7 through the communication network 3. If a query is needed to be made to either of the respective devices 4, 5 or 7. the remote control management unit 62 notifies the reception management unit 61 of the need.

The main storage unit 63 is used to temporarily store information which is required by the remote control management unit 62 or transferred from the respective devices 4, 5 or 7 when remote controlling the respective devices 4, 5 or 7.

The auxiliary storage unit 64 serves to store period information received from the information processing apparatus 81.

The auxiliary storage unit 65 serves to store the property (status) information of the users 1; and the auxiliary storage unit 66 serves to store the data required. for acquiring information of the users 1.

Also, the auxiliary storage unit 67 serves to store the calling numbers of the users (information acquisition pollees) 1 received from the service control station 7.

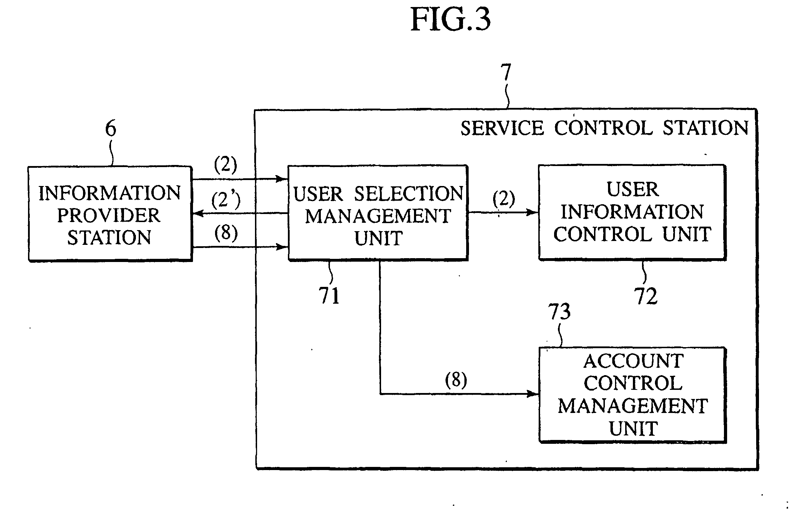

The service control station 7 is composed of an user selection management unit 71, a user information control unit 72 and an account control management unit 73 as illustrated in Fig.3.

The user selection management unit 71 serves to manage the user information control unit 72 and the account information control unit 73.

The user selection management unit 71 also serves to search the users 1 for information acquisition pollees in response to the request from the information provider station 6, and return the results of searching such as the calling numbers of the information acquisition pollees and the like information to the information provider station 6.

Also, the user selection management unit 71 outputs a request to the account control management unit 73 to give preferential treatment to the users 1 who have provided the requested information.

The user selection management unit 71 receives the information acquisition request together with property information designated of the users and the data required for acquiring information from the information processing apparatus 81 which is used by the information acquisition client 8. selects the users 1 stored in the user information control unit 72 with reference to the property information of said users 1, and then searches the calling numbers of the communication devices 2 used by said users 1.

The user information control unit 72 is a database which is used for storing and managing the personal information provided by the users 1 in advance.

More specifically, the user information control unit 72 serves to store the subscriber information provided by the users 1 for the telecommunications carrier on the basis of the agreement between the telecommunications carrier and each of the users 1.

The user information control unit 72 is capable of searching for users (information acquisition pollees) 1 who meet predetermined requirements with the property information of the users 1 as search terms.

Also, in accordance with the present embodiment of the present invention, the personal information of the users 1 accumulated in the user information control unit 72 includes an identifier (which is referred to as "information acquisition service identifier" hereinafter) indicative of whether or not each of said users 1 permits said information acquisition (i.e., whether or not the user has joined the information acquisition service).

Furthermore, the user information control unit 72 stores the property information of each of the users 1 and the calling number of the communication devices 2 in order that they are associated with each other.

The account control management unit 73 serves to give preferential treatment to the users 1 who have provided the requested information in response to the request from the user selection management unit 71 with respect to the charge such as a reduction in the communication fees, increments in the accounts as prepaid.

The preferential treatment of the users 1 is provided by the account control management unit 73 in accordance with the frequency and the quality of answer data acquired from the users 1.

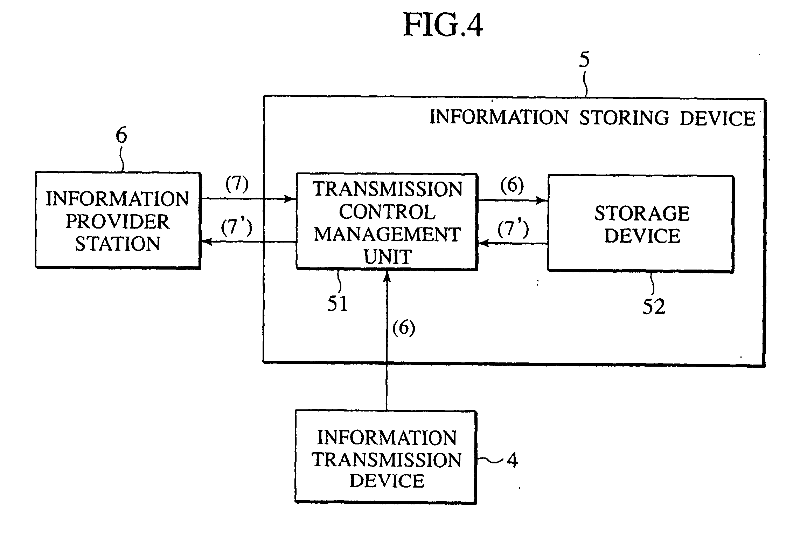

The information storing device 5 is composed of a transmission control unit 51 and a storage device 52 as illustrated in Fig.4.

The transmission control unit 51 serves to receive the requested information (answer data) which is transferred from the users 1 through the information transmission device 4 and to store the information in the storage device 52.

Also, the transmission control unit 51 has a function of reading and compiling requested information (answer data) from the storage device 52 when necessary.

Furthermore, the transmission control unit 51 has a o function of terminating the information propagation signal from the information transmission device 4.

Still further, the transmission control unit 51 takes control of transferring requested information (answer data) acquired from the communication devices 2 of the users 1 or requested information (answer data) compiled in the information provider station 6.

The storage device 52 serves to store requested information (answer data) returned from the users 1 after processing the data required for acquiring information by means of the communication devices 2 at the user end.

In accordance with the present embodiment of the present invention, the storage device 52 stores the requested information (answer data) returned from each of the users 1 and the calling number of the communication device 2 of said each user in order that they are associated with each other for selecting the users 1 (the respondents).

Meanwhile, the information storing device 5 may be incorporated in the information provider station 6 as a built-in auxiliary storage unit. In this case, the information provider station 6 is provided with a further auxiliary storage unit, which is provided with functions equivalent to those of the information storing device 5.

The information processing apparatus 81 is an apparatus possessed by the information acquisition client 8 who requests the acquisition of requested information such as answer data to a questionnaire. The information processing apparatus 81 serves to send an information acquisition request to the information provider station 6.

Also, the information processing apparatus 81 designates the property information of the users 1 as the information acquisition pollees, generates the data required for acquiring information such as a questionnaire. and stores and manages the information.

In this case, the information acquisition client 8 designates the property information of the users 1 in accordance with an information structure 1 and an information structure 2 described below.

The information structure 1 includes the following information.
· Sex
· Residence
· Age
· Location information of the communication device 2
· Information acquisition service identifier
· Configuration of the transmission system
· Other information which is provided on the basis of the agreement between the telecommunications carrier and the users 1 in advance

Also, the information structure 2 includes the following information.
· Occupation
· Place of work
· Interest
· Taste
· Other information which is provided on the basis of the agreement of the information acquisition service between the telecommunications carrier and the users 1 in advance

Meanwhile, the information structure 1 includes the information which is compulsorily obtained under the communication network agreement between the telecommunications carrier and the users 1 or automatically obtained by the functions of the communication network 3, i.e., the information which is maintained in the communication network 3 irrespective of whether or not the information acquisition service is joined.

On the other hand, the information structure 2 includes the information which is provided for the telecommunications carrier by the users 1 on the basis of the agreement of the information acquisition service.

o On the basis of the information structure 1 and the information structure 2, the information processing apparatus 81 can designate, for example, the property information of the users 1 who are women in their twenties living in Tokyo and working in media companies by identifying "Sex", "Residence" and "Age" of the information structure 1 and "Occupation" of the information structure 2.

The communication device 2 is, for example, a mobile communication terminal such as a portable communication terminal, a PHS terminal.

The location information of the communication device 2 can be acquired, for example, by identifying the cell where the communication device 2 is located during communication with reference to the identification information of the base station communicating with the communication device 2.

Meanwhile, the communication system for use in communication with the communication devices 2 may be a packet transfer communication system, a circuit switching system and so forth.

Particularly, the communication device 2 is composed of a transmission and reception unit 21, a data analyzing unit 22, a data processing unit 23, a display unit 24, a console unit 25 and an additional information generation unit 26.

The transmission and reception unit 21 is a communication device serving to receive data required for acquiring information (for example, a questionnaire) transferred from the information transmission device 4 and serving to transmit answer data processed (for example, the answer data to a questionnaire).

Also, the transmission and reception unit 21 transmits data received from the information transmission device 4 to the data analyzing unit 22 and receives data generated by the data processing unit 23 to transmit the data generated to the information transmission device 4.

The data analyzing unit 22 extracts the data required for acquiring information by analyzing the contents of data obtained from the transmission and reception unit 21 and outputs the data obtained to the data processing unit 23.

Also. the data analyzing unit 22 serves to output the data required for acquiring information obtained to the display unit 24 in order to display said data required for acquiring information in the display unit 24.

Furthermore, the data analyzing unit 22 serves to acquire data processed by the data processing unit 23 in order to display the processed data in the display unit 24.

The data processing unit 23 serves to process the data required for acquiring information input from the data analyzing unit 22 in order to generate answer data.

That is, the data processing unit 23 generates answer data by adding, to the data required for acquiring information such as a questionnaire. the answer to a questionnaire in response to manipulations by the users 1. The answer data generated by the data processing unit 23 is transmitted to the information transmission device 4 through the transmission and reception unit 21.

Also, the data processing unit 23 transmits the data processed to the data analyzing unit 22, each time processing data is required, while displaying the data being processed in the display unit 24.

Furthermore, the data processing unit 23 is provided with a function of automatically acquiring additional information from the additional information generation unit 26 and adding the information to the answer data.

The display unit 24 is composed of display means such as a liquid crystal panel. In accordance with the present embodiment of the present invention, the display unit 24 is provided with Web browser function of analyzing and displaying data written in a Mark-up language such as HTML.

Meanwhile, for example, in the case where the data required for acquiring information is written in a program language executable in the client, e.g., Java, as a questionnaire program, the display unit 24 has a function of analyzing and displaying said program language data.

The console unit 25 is composed of an input device such as manipulation buttons of a portable telephone terminal. The console unit 25 serves to take control of the data processing unit 23 in accordance with manipulations by the users 1.

Meanwhile, in the case where the communication device 2 is a mobile terminal such as a PDA. the console unit 25 may be composed of a touch panel. a keyboard and so forth.

The additional information generation unit 26 serves to transmit, to the data processing unit 23, the information to be automatically added to the answer data to a questionnaire.

For example, the additional information generation unit 26 is composed of a memory for storing the calling numbers of the communication devices 2, the IDs of the communication devices 2 and the like, and clock means for acquiring the current time and the like.

In this case, the data required for acquiring information in accordance with the present embodiment is composed of non-sound information such as text data, for example, tagged text data written in HTML, XML and the like Mark-up language for displaying letters, symbols, graphics and so forth in the communication device 2.

The data required for acquiring information in accordance with the present embodiment is delivered to the communication devices 2 through e-mail.

In this case, the Web browser function (the display unit 24) of the communication device 2 serves to display HTML data indicative of the details of a questionnaire. The users 1 make use of the console unit 25 to input an answer to said questionnaire. The data processing unit 23 generates the answer data. The transmission and reception unit 21 returns the answer data to the information transmission device 4 in accordance with the reply function of the Web browser function.

Particularly, in accordance with the present embodiment, the HTML data delivered through the e-mail as described above includes the URL to the Web page showing a questionnaire which can be browsed only by the extracted users 1.

The communication device 2 can access the Web page to get the questionnaire described above using the Web browser function.

When the Web browser function of the communication device 2 accesses the Web page corresponding to the above URL, the data required for acquiring information is the data of the Web page (e.g., in HTML) delivered to the communication devices 2. In this case, the data written in the Web page in answer to the questionnaire and returned is the answer data.

Also, the information storing device 5 functions as a Web server provided with a database function.

The communication system for use in this case may be a packet transfer communication system or a circuit switching system. Also, the Web server can be implemented in a location outside of the communication network 3.

Furthermore, in the case where the data required for acquiring information is an executable program written in a script language such as Java, the data processing unit 23 may be implemented in order to execute the executable program to generate answer data.

In this case, in accordance with the present invention, the communication device 2 may directly receive the Java program, or may first receive the URL of a server of the Java program and then access the URL of said server by the Web browser function of the communication device 2.

### (Operation of The Information Acquisition System In Accordance With The Present Embodiment)

The operation of the information acquisition system having a configuration described above will be explained in the following description.

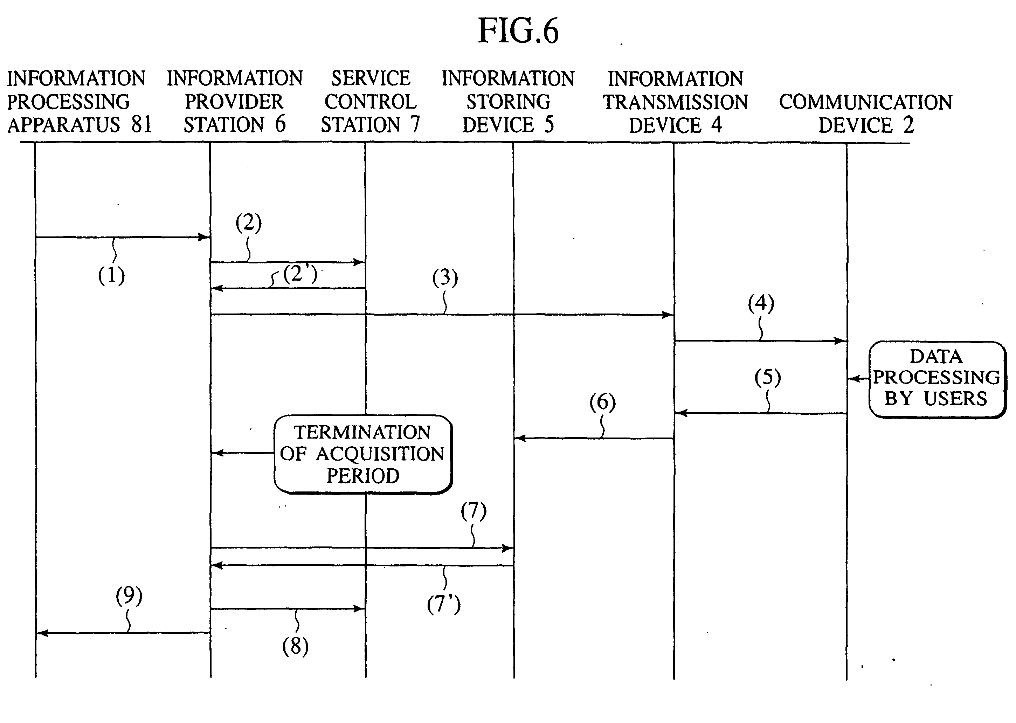

Fig.6 is a sequence diagram showing the procedure of acquiring information by the use of the information acquisition system having the configuration as described above.

Meanwhile, in accordance with the present embodiment, it is assumed that the communication network 3 is a mobile communication network; that the information acquisition client 8 is a newspaper publishing company; and that the information which the information acquisition client 8 wants to acquire from the users 1 of the communication network 3 is answer data to a questionnaire such as a public-opinion poll.

In the step (1), the information acquisition client 8 transmits to the information provider station 6 an information acquisition request for acquiring requested information such as answer data to a questionnaire by using the information processing apparatus 81.

In this case, the information processing apparatus 81 designates the property information of users as the requirements for information acquisition pollees (respondents to the questionnaire) while transmitting the number of the information acquisition pollees, the data required for acquiring information provided for the users 1, the period information indicative of the predetermined period for acquiring information, the maximum number of the answer data instances and so forth.

More specifically, in the step (1), in the information provider station 6 illustrated in Pig.2, the period information obtained from the information processing apparatus 81, the property information of the users and the data required for acquiring information and provided for the users 1 is transferred to and stored in the auxiliary storage unit 64 to 66 by the reception management unit 61.

The designation of the property information of the users 1 in accordance with the present embodiment is carried out as in the following specific explanation,

The information processing apparatus 81 designates. as first information acquisition pollees, the users 1 having the following property information. Also, the information processing apparatus 81 designates 500 as the number of the first information acquisition pollees to be extracted.
· Age: Twenties
· Residence: Tokyo
· Sex: Female
· Others: Not Required

The information processing apparatus 81 designates, as second information acquisition pollees, the users 1 having the following property information. Also, the information processing apparatus 81 designates 500 as the number of the second information acquisition pollees to be extracted.
· Occupation: Construction Trade
· Others: Not Required

The information processing apparatus 81 designates, as third information acquisition pollees, the users 1 having the following property information. Also, the information processing apparatus 81 designates 1000 as the number of the third information acquisition pollees to be extracted.
· Age: Twenties or Over
· Others: Not Required

As described above, the information processing apparatus 81 designates the property information of three types of the information acquisition pollees. The information processing apparatus 81 designates, as the first information acquisition pollees, 500 women in their twenties living in Tokyo for research.

Also, the information processing apparatus 81 designates, as the second information acquisition pollees, 500 persons in their twenties having positions in the construction trade for research.

Furthermore, the information processing apparatus 81 designates, as the third information acquisition pollees, 1000 persons in their twenties or over for research. In such a case, it is considered that the information acquisition client 8 designates persons eligible to vote as the third information acquisition pollees.

While a plurality items of the property information may be designated, the information acquisition client 8 has to determine in advance whether or not one respondent (user) 1 can answer a plurality of questionnaires.

The data required for acquiring information provided by the information acquisition client 8 is as follows. In accordance with the present embodiment, the data required for acquiring information includes items "a" to "d" of the questionnaire that a newspaper publishing company as the information acquisition client 8 wants to survey.
a. Do you approved of the current ruling party?
   i) Yes, ii) Yes on balance,
   iii) No on balance, iv) No
b. Do you approved of the current cabinet?
   i) Yes, 11) Yes on balance,
   iii) No on balance, iv) No
c. What is your opinion about the relationship between the ruling party and the cabinet?
   i) Approve of both the government party and the cabinet
   ii) Approve of the cabinet but do not approve of the ruling party
   iii) Approve the government party but not approve the cabinet
   iv) Disapprove of both the ruling party and the cabinet
d. Do you hope how long the current cabinet stays in power?
   i) resign immediately, ii) 1 to 2 years
   iii) 2 to 3 years, iv) 4 to 5 years, v) Many years (for a long time)

In the step (2), the information provider station 6 requests the service control station 7 to select users 1 corresponding to the property information designated by the information processing apparatus 81.

In response to the request, the service control station 7 selects users 1 as information acquisition pollees with reference to the personal information and the usage information of the communication network subscribers stored in the user information control unit 72. In this case, the designated number of the information acquisition pollees are selected in accordance with a predetermined algorithm.

More specifically, in the step (2), the reception management unit 61 starts the information acquisition processing on the basis of the period information stored in the auxiliary storage unit 64 and transfers the property information of users 1 stored in the auxiliary storage unit 65 to the service control station 7 in the information provider station 6 as illustrated in Fig.2.

On the other hand, in the service control station 7 illustrated in Fig.3, the user selection management unit 71 receives the property information transmitted from the information provider station 6 and requests the user information control unit 72 to search for the users 1 having the designated property information.

Thereafter, in the service control station 7, the user information control unit 72 selects users from among the users 1 given the information acquisition service identifier in the step (2') while the user selection management unit 71 notifies the information provider station 6 of the calling numbers of the communication devices 2 of the selected users 1.

In the information provider station 6, the reception management unit 61 stores in the auxiliary storage unit 67 the calling numbers of the communication devices 2 of said users 1 selected by the service control station 7.

Then, in the step (3), the information transmission device 4 is instructed to transfer the data required for acquiring information received from the information processing system 81 to the communication devices 2 selected on the basis of the calling numbers of the communication devices 2 of said users 1 selected by the service control station 7 in the information provider station 6.

More specifically, in the information provider station 6 illustrated in Fig.2, the reception management unit 61 transfers to the information transmission device 4 the data required for acquiring information of the users 1 stored in the auxiliary storage unit 66 on the basis of the calling numbers of the communication devices 2 of said users 1 stored in the auxiliary storage unit 67.

Meanwhile, in accordance with the present embodiment, while the reception management unit 3 starts and terminates the information acquisition processing in accordance with the period information stored in the auxiliary storage unit 64, it is possible to perform selection of information acquisition pollees 1 (the step (2)) in advance of starting of the predetermined period and then to transfer the data required for acquiring information (the step (3)) after starting of the predetermined period.

However, since it is possible to cancel the information acquisition request from the information acquisition client 8 or change the information acquisition service agreement after selecting the information acquisition pollees 1 and before starting transmission of the data required for acquiring information, it is desirable to start the transmission of the property information of users 1 at the same time starting the predetermined period of the information acquisition processing.

In the step (4), the information transmission device 4 transfers the data required for acquiring information to the communication devices 2 designated by the information provider station 6.

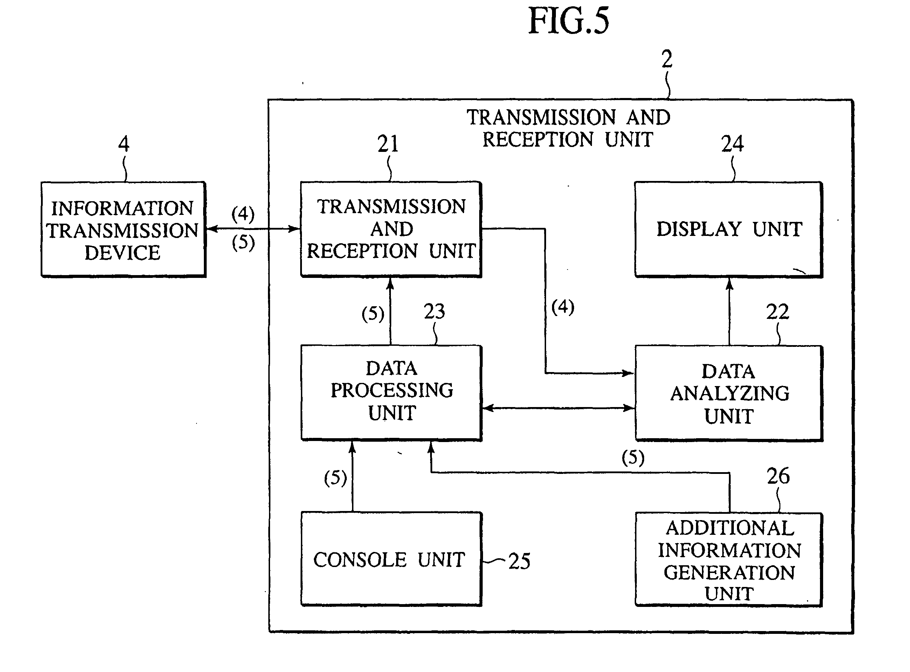

More specifically, in the communication device 2, the transmission and reception unit 21 receives data transmitted from the information transmission device 4 and outputs the data to the data analyzing unit 22 as illustrated in Fig. 5. The data analyzing unit 22 extracts the data required for acquiring information from among the received data and outputs the extracted data to the data processing unit 23 in order to display the data in the display unit 24.

In the step (5), the users 1 generates answer data by processing the data required for acquiring information and returns the answer data to the information transmission device 4.

More specifically, as illustrated in Fig.5, the users generate answer data by manipulations of the console unit 25 to process the data with reference to the data required for acquiring information displayed in the display unit 24.

Added to the answer data are the identifiers (IDs). the calling numbers, the current time and the like of the communication devices 2 outputted from the additional information generation unit 26. The answer data generated in this manner is transmitted to the information transmission device 4 through the transmission and reception unit 21.

In the step (6), the information transmission device 4 transfers the answer data to the information storing device 5. At this time, the information transmission device 4 also transfers the calling numbers of the communication devices 2 of the respondents as the identifiers for use in giving preferential treatment to the respondents (users) 1 with respect to charges as explained below.

More specifically, in the information storing device 5 illustrated in Fig.4, the transmission control unit 51 receives the answer data transferred from the information transmission device 4 and stores in the storage device 52 the answer data and the calling numbers of the communication devices 2 of the respondents 1.

Then, in the step (7), when the information provider station 6 detects the expiration of an acquisition period received from the information processing system 81 for acquiring information, the information provider station 6 requests the information storing device 5 to compile the acquired answer data.

More specifically, in the information provider station 6 illustrated in Fig.2, when the acquisition period expires, the reception management unit 61 requires the information storing device 5 to transfer the answer data acquired from the users 1.

Meanwhile, the acquisition period can be judged to expire, for example, when the predetermined period elapses or when the number of the respondents reaches a predetermined maximum value.

In the step (7'), the information storing device 5 transfers the information compiled to the information provider station 6 in response to the request of the information provider station 6.

More specifically, in the information storing device 5 illustrated in Fig.4. the transmission control unit 51 transfers to the information provider station 6 the answer data and the calling numbers which are obtained from the storage device 52.

Meanwhile, in the steps (7) and (7'), if the information processing apparatus 81 outputs an instruction in order that the acquisition period expires when the number of respondents reaches a predetermined maximum value, the information provider station 6 may transfer the maximum number of respondents to the information storing device 5 so that, when the number of the respondents reaches the maximum number of respondents, the information storing device 5 notifies the information provider station 6 of that fact followed by transferring the compiled data.

Also, each time the answer data from the users 1 arrives the information storing device 5, the information storing device 5 may notify the information provider station 6 of the count of the arrival times of the answer data so that, when the count reaches the maximum value, the information acquisition processing from the information storing device 5 to the information provider station 6 is terminated.

In the steps (8) and (9), the information provider station 6 transfers the compiled answer data in the step (7) to the information processing apparatus 81 and requires the service control station 7 to give preferential treatment to the users 1 who have provided answer data with respect to charges, for example, a reduction in the communication fees.

In such a case, the respondents 1 to be given preferential treatment are selected with reference to the calling numbers which are stored together with the answer data. Meanwhile, the steps (8) and (9) are inconsecutive and their order is changeable.

More specifically, in the information provider station 6 illustrated in Fig.2, the reception management unit 61 transfers the answer data compiled to the information processing apparatus 81 and request the service control station 7 to give preferential treatment to the users 1 who have provided answer data with respect to the charge.

More specifically, in the service control station 7 illustrated in Fig.3, the user selection management unit 71 is requested by the information provider station 6 to give preferential treatment to the users 1 having the calling numbers of the communication devices 2 of the users 1 who have provided answer data with respect to the charge, and in turn, requests the account information control unit 73 to give preferential treatment to the users 1 with respect to communications charges with reference to the designated calling numbers.

### (Action and Effects of The Information Acquisition System In Accordance With The Present Embodiment)

In accordance with the information acquisition system 10 described as the present embodiment, the information acquisition client 8 can acquire requested information (for example. answer data to a questionnaire) only by requesting the information provider station 6 as an information acquisition agent (usually a telecommunications carrier). for the requested information, and therefore it is possible to reduce the effort, time and expense required to acquire information.

Particularly, from now onwards, the population of the users 1 of the public communication network 3 is considered to be extremely large. Accordingly, it is possible to acquire information from an extremely large and reliable population by applying the information acquisition system 10 in accordance with the present embodiment to the public communication network 3 since a telecommunications carrier possesses enormous amounts of user information while the communication network connection agreement is made only after strict identity confirmation of each user.

On the other hand, in the present state of the mobile communication field, a communication device 2 is worn by the owner most of the time so that the users 1 can anywhere and anytime receive the data required for acquiring information and provide answer data thereto and therefore it is possible to solve the shortcomings that make research conventional impossible, as with conventional polls via fixed telephones, unless a user (an information acquisition pollee) 1 is located in a certain place at a predetermined time, where his telephone is placed.

Meanwhile, in the information acquisition system 10 in accordance with the present embodiment, there have been considered, as methods of selecting the information acquisition pollees 1 or compiling the answer data, for example, a method of sampling users 1 from the population with reference to the property information of the users 1, a method of acquiring large stores of answer data (the answer data of information acquisition pollees 1 being randomly selected or existing answer data having already been compiled) for data mining at the communication network 3, and a method of making use of applying coding/decoding treatment to the above two methods.

In accordance with the information acquisition system 10 described in the present embodiment, since there is provided the account information control unit 73 serving to selectively give preferential treatment to information acquisition pollees 1 with reference to the frequency and the quality of the answer data transmitted by said information acquisition pollees 1. it is possible to develop incentives to provide answer data (requested information) by giving preferential treatment to the information acquisition pollees 1 who have provided answer data (requested information) as a reward for providing information.

Such preferential treatment may include charge benefits such as a reduction in the communication network usage fees, an increment in the account as prepaid and so forth, a priority for enjoying additional services (new services, trial services and the like), and valuable information being offered free in accordance with the property information of the users 1.

In the case where such preferential treatment is given in regard to charges, it is possible to reduce the conventional labor and cost required for sending a reward in compensation for providing information to the users 1.

In the information acquisition system in accordance with present embodiment, it is possible for the information acquisition client 8 to acquire requested information only by transmitting. to the information provider station 6, the property information of users 1 and other information (provision information) required for acquiring the requested information together with the period information without the being a need for any other procedure thereafter to acquire the requested information.

Namely, it is possible for a newspaper publishing company as the information acquisition client 8 to reduce the cost in time and man-power incurred to determine the target pollees, the scale of research, the items of research, then searching the target pollees by the company itself and asking the target pollees to answer to questionnaire items through the communication network 3, followed by sending rewards.

The newspaper publishing company and the telecommunications carrier may make a service agreement that the newspaper publishing company takes on an obligation to pay the communication fees incurred to the users 1 for acquiring information, the costs corresponding to the preferential treatment in the communication fees such as reduction, and a service charge.

Furthermore, it is expected that users 1 answer a questionnaire of their own initiative because of the preferential treatment in regard to the communication fees resulting in a higher ratio of respondents.

### (Exemplary Modifications)

It should be understood that the present invention is not to be regarded as limited to the embodiments disclosed herein and various alternatives and modifications can be devised as described below.

In accordance with the data required for acquiring information and transmitted to the communication devices 2 is data such as HTML data consisting of character strings and so forth, the communication system is a circuit switching system or a packet transfer communication system. However, the data required for acquiring information may include sound data.

Meanwhile, such data required for acquiring information including sound data may be multimedia data of combination of motion picture data, character data, text data, audible (sound) data.

For example, the communication devices 2 may be connected to the communication network 3 in accordance with a packet transfer communication system or a circuit switching system, and designed to phonetically output a questionnaire item and decision branches of an answer so that the users 1 can answer said questionnaire by pushing a button corresponding to one of the decision branches.

In this case, the push signals (signals formed of manipulation sound of the communication devices) are transmitted from the communication devices 2 of the users 1 to the information transmission device 4, and then transferred from the information transmission device 4 to the information storing device 5, which stores the answer data (answer item information) selected by the respondents as mapping data indicative of the correspondence of the respective push signals to the answer data (answer item information).

Also, in the case where the questionnaire is not based on decision branches, the answer data as phonetically provided by the users 1 may be stored as it is in the information storing device 5 as voice data.

Furthermore, it is possible to transmit to the information acquisition pollees 1 non-sound information as an information provision request, for example, by e-mail and to phonetically provide a questionnaire item and decision branches.

In this case, a telephone number for connecting a communication system provided with phonetic guidance functionality for questionnaire items is transferred to the communication devices 2 as non-sound information while the answer data to the questionnaire is transmitted in the same manner as in the above described information acquisition case by means of sound.

Furthermore, while the above described embodiment has been explained on the assumption that the network is based on a mobile communication system, the communication network 3 may be a public switched telephone network (PSTN) or a communication network for personal handyphone system (PHS).

In the case where the communication devices 2 have a function of visually displaying provision information (a questionnaire item, decision branches of an answer and the like) in either a PSTN or a PHS communication network, the information acquisition system in accordance with the present exemplary modification can be implemented in the same manner as the above described embodiment irrespective of which sound or non-sound information is provided for the users 1.

Conversely, in the case where the communication devices 2 do not have a function of visually displaying provision information, the information acquisition system in accordance with the present exemplary modification can be implemented in the same manner as the above described embodiment in which the data required for acquiring information is sound information.

However, in the case of a PSTN, communication is impossible unless a user 1 is located in the vicinity of the place where the communication device 2 of him is placed. For this reason, when information is acquired by the information acquisition system by means of sound information, by means of non-sound information or by means of a combination of sound information and non-sound information, the telephone number of a communication system provided with phonetic guidance functionality for questionnaire items is delivered in advance so that the users 1 transmits answer data whenever they can start communication by means of the communication devices 2.

Also, the property information of the users described above may include the location information of the communication devices 2 of said users.

In accordance with the information acquisition system 10 described as the present embodiment, it is possible to increase the credibility of answer data by the use of the location information of the respondents 1, and therefore to make the information acquisition service evermore satisfactory.

Meanwhile, the location information may be acquired by identifying the cell where the communication device 2 is located with reference to the exchange number of the relay base station in the mobile communication system, or by means of a location identifying system such as a GPS implemented in the communication devices 2.

Also, in accordance with the information acquisition system 10 described as the present embodiment, it is possible to use sound as the data required for acquiring information, to use, as answer data, manipulation sound of the communication devices 2 of the users 1, and therefore to generate answer data by voices, enabling data processing by a simple and easy operation.

As explained above, in accordance with the present invention, the information acquisition client 8 can acquire the requested information at its end by transmitting, to the information provider station 6 of the telecommunications carrier, a request for requested information (answer data) together with the property information of the population corresponding to the requested information without needing any other procedures thereafter to acquire the requested information (since such other procedures are performed in the communication network 3) so that it is possible to lessen the burden on the information acquisition client 8.

Namely, in accordance with the present invention, the information acquisition client 8 can acquire requested information by transferring, to the information provider station 6 of the telecommunications carrier, the period information indicative of the period for acquiring information, the property information of information acquisition pollees 1, the number of the information acquisition pollees (the number of respondents), and the provision information (a questionnaire item, decision branches of answer and the like) through the information processing apparatus 81 of the information acquisition client 8, while leaving other tasks necessary to acquire information to the communication network.

Also, in the case of the present invention, it is possible to give preferential treatment, for example, a reduction in communication fees, to the respondents 1 (the users 1 who have provided answer data), and therefore to develop incentives to provide information and make it easy to pay a reward (gratuity) for answer data.

In accordance with the present invention, it is possible for the information acquisition client 8 to reduce the cost in man-power, in time and in expenditure required for acquiring requested information (answer data to a questionnaire); it is possible for the telecommunications carrier to gain a new source of income; and it is possible for the users 1 of the communication network 3 to reduce communications charges by the preferential treatment.

Additional advantages and modifications will readily occur to those skilled in the art. Therefore, the invention in its broader aspects is not limited to the specific details and the representative embodiment shown and described herein.

## Claims

1. An information acquisition system (10) for acquiring requested information from mobile communication devices (2) used by users (1) of a mobile communication network (3) through the mobile communication network; the information acquisition system (10) comprising:
an account information control unit (72) which is configured to store property information of the users (1) ;
an user selection management unit (71) which is configured to receive data required for acquiring information including the property information from an information processing apparatus (81) used by an information acquisition client (8), and to select users (1) from among the users (1) stored in the account information control unit (72) with reference to the property information;
an information storing device (5) which is configured to acquire and store answer data which is generated by the selected users (1) with the mobile communication devices (2); and
an information provider station (6) which is configured to compile the answer data stored in the information storing device (5), and to transfer the compiled result to the information processing apparatus (81);
**characterized in that**
the account information control unit (72) is adapted to store calling numbers of the mobile communication devices (2) and information acquisition service identifiers in order that they are associated with the property information, the information acquisition service identifiers indicating whether each of the users (1) has joined the information acquisition system (10);
the user selection management unit (71) is adapted to select users (1) from among the users (1) which have joined the information acquisition system (10), with reference to the property information and the information acquisition service identifiers, and to detect the calling numbers of the mobile communication devices (2) used by the selected users (1);
the information acquisition system (10) further comprises an information transmission device (4) which is configured to transfer the data required for acquiring information to the mobile communication devices (81) used by the selected users (1) with reference to the detected calling numbers, the data required for acquiring information being non-sound information; and
the answer data is generated by the selected users (1) with the mobile communication devices (2) by processing the data required for acquiring information.

2. The information acquisition system (10) as claimed in claim 1, wherein the property information includes the location information of the mobile communication devices (2) used by the users (1).

3. The information acquisition system (10) as claimed in claim 1 or 2, further comprising an account management unit (73) which is configured to give preferential treatment to the users (1) in accordance with the frequency and the quality of the answer data acquired from the users (1).

4. The information acquisition system (10) as claimed in any one of claims 1 to 3, wherein the information transmission device (4) is adapted to transfer the data required for acquiring information to the mobile communication devices (2) through e-mails.

5. An information acquisition method for acquiring requested information from mobile communication devices (2) used by users (1) of a mobile communication network (3) through the communication network (3), the information acquisition method comprising the steps of:
storing property information of the users (1) in an account information control unit (72) ;
receiving data required for acquiring information including the property information from an information processing apparatus (81) used by an information acquisition client (8);
selecting users (1) from among the users (1) stored in the account information control unit (72) with reference to the property information;
acquiring and storing answer data which is generated by the selected users (1) with the mobile communication devices (2);
compiling the answer data stored in an information storing device (5); and
transferring the compiled result to the information processing apparatus (81);
**characterized in that**
in the storing step, calling numbers of the mobile communication devices (2) and information acquisition service identifiers are associated with the property information, the information acquisition service identifiers indicating whether each of the users (1) has joined an information acquisition service;
in the selecting step, users (1) are selected from among the users (1) which have joined the information acquisition system (10), with reference to the property information and the information acquisition service identifiers, and the calling numbers of the mobile communication devices (2) used by the selected users (1) are detected;
the data required for acquiring information is transferred to the mobile communication devices (81) used by the selected users (1) with reference to the detected calling numbers, the data required for acquiring information being non-sound information; and
the answer data is generated by the selected users (1) with the mobile communication devices (2) by processing the data required for acquiring information.

6. The information acquisition method as claimed in claim 5, wherein the property information includes the location information of the mobile communication devices (2) used by the users (1).

7. The information acquisition method as claimed in claim 5 or 6, further comprising a step of giving preferential treatment to the users (1) in accordance with the frequency and the quality of the answer data acquired from the users (1).

8. The information acquisition method as claimed in any one of claims 5 to 7, wherein the data required for acquiring information is transferred to the mobile communication devices (2) through emails.

## Patentansprüche

1. Ein Informations-Erfassungssystem (10) zum Erfassen angeforderter Information von Mobilkommunikationsgeräten (2), die von Benutzern (1) eines Mobilkommunikationsnetzwerks (3) durch das Mobilkommunikationsnetzwerk verwendet werden; wobei das Informations-Erfassungssystem (10) umfasst:
eine Konto-Informationssteuereinheit (72), die ausgebildet ist zum Speichern von Eigenschaftsinformation der Benutzer (1);
eine Benutzerauswahl-Managementeinheit (71), die ausgebildet ist zum Empfangen von Daten, die zum Erfassen von Information mit der Eigenschaftsinformation von einer Informationsverarbeitungsvorrichtung (81) benötigt werden, die von einem Informationserfassungs-Client (8) verwendet wird, sowie zum Auswählen von Benutzern (1) unter den Benutzern (1), die in der Konto-Informationssteuereinheit (72) mit Bezug auf die Eigenschaftsinformation gespeichert werden;
ein Informationsspeichergerät (5), das ausgebildet ist zum Erfassen und Speichern von Antwortdaten, die durch die ausgewählten Benutzer (1) mit den Mobilkommunikationsgeräten (2) erzeugt werden; und
eine Informationsanbieterstation (6), die ausgebildet ist zum Kompilieren der in dem Informationsspeichergerät (5) gespeicherten Antwortdaten und zum Transferieren des erstellten Ergebnisses an die Informationsverarbeitungsvorrichtung (81);
**dadurch gekennzeichnet, dass**
die Kontoinformationssteuereinheit (72) ausgebildet ist zum Speichern von Rufnummern der Mobilkommunikationsgeräte (2) und Informationserfassungs-Service-Identifizierer, um sie in Zusammenhang mit der Eigenschaftsinformation zu bringen, wobei die Informationserfassungs-Service-Identifizierer kennzeichnen, ob jeder der Benutzer (1) dem Informationserfassungssystem (10) beigetreten ist;
die Benutzerauswahl-Managementeinheit (71) ausgebildet ist zum Auswählen von Benutzern (1) unter den Benutzern (1), die dem Informationserfassungssystem (10) beigetreten sind mit Bezug auf die Eigenschaftsinformation und die Informationserfassungs-Service-Identifizierer und zum Detektieren der Rufnummern der Mobilkommunikationsgeräte (2), die von den ausgewählten Benutzern (1) verwendet werden;
das Informationserfassungssystem (10) ferner ein Informationsübertragungsgerät (4) umfasst, das ausgebildet ist zum Transferieren der Daten, die benötigt werden zum Erfassen von Information, an die Mobilkommunikationsgeräte (81), die von den ausgewählten Benutzern (1) verwendet werden mit Bezug auf die detektierten Rufnummern, wobei die zum Erfassen von Information benötigten Daten keine Toninformationen sind; und
die Antwortdaten erzeugt werden durch die ausgewählten Benutzer (1) mit den Mobilkommunikationsgeräten (2) durch Verarbeiten der zum Erfassen von Information benötigten Daten.

2. Das Informationserfassungssystem (10) nach Anspruch 1, wobei die Eigenschaftsinformation die Ortsinformation der Mobilkommunikationsgeräte (2) enthält, die von den Benutzern (1) verwendet werden.

3. Das Informationserfassungssystem (10) nach Anspruch 1 oder 2, ferner umfassend eine Konto-Managementeinheit (73), die dazu ausgebildet ist den Benutzen (1) gemäß der Häufigkeit und der Qualität der von den Benutzen (1) erfassten Antwortdaten eine Vorzugsbehandlung zu geben.

4. Das Informationserfassungssystem (10) nach einem der Ansprüche 1 bis 3, wobei das Informationsübertragungsgerät (4) ausgebildet ist zum Transferieren der zum Erfassen von Information benötigten Daten durch Emails an die Mobilkommunikationsgeräte (2).

5. Ein Informationserfassungs-Verfahren zum Erfassen von angeforderter Information von Mobilkommunikationsgeräten (2), die von Benutzern (1) eines Mobilkommunikationsnetzwerks (3) durch das Kommunikationsnetzwerk (3) verwendet werden, wobei das Informationserfassungsverfahren die Schritte umfasst:
Speichern von Eigenschaftsinformation der Benutzer (1) in einer Kontoinformations-Steuereinheit (72);
Empfangen von zum Erfassen von Information benötigten Daten mit der Eigenschaftsinformation von einer Informationsverarbeitungsvorrichtung (81), die von einem Informationserfassungs-Klient (8) verwendet wird;
Auswählen von Benutzern (1) unter den Benutzern (1), die in der Kontoinformationssteuereinheit (72) mit Bezug auf die Eigenschaftsinformation gespeichert werden;
Erfassen und Speichern von Antwortdaten, die erzeugt werden durch die ausgewählten Benutzer (1) mit den Mobilkommunikationsgeräten (2);
Kompilieren der in einem Informationsspeichergerät (5) gespeicherten Antwortdaten; und
Transferieren des erstellten Ergebnisses an die Informationsverarbeitungsvorrichtung (81);
**dadurch gekennzeichnet, dass**
in dem Speicherschritt Rufnummern der Mobilkommunikationsgeräte (2) und Informationserfassungs-Service-Identifizierer mit der Eigenschaftsinformation in Zusammenhang stehen, wobei die Informationserfassungs-Service-Identifizierer kennzeichnen, ob jeder der Benutzer (1) einem Informationserfassungs-Service beigetreten ist;
in dem Auswahlschritt Benutzer (1) ausgewählt werden aus den Benutzern (1), die dem Informationserfassungssystem (10) beigetreten sind, mit Bezug auf die Eigenschaftsinformation und die Informationserfassungs-Service-Identifizierer, und dass die Rufnummern der Mobilkommunikationsgeräte (2), die von den ausgewählten Benutzern (1) verwendet werden, detektiert werden;
die zum Erfassen von Information benötigten Daten an die Mobilkommunikationsgeräte (81) transferiert werden, die von den ausgewählten Benutzern (1) verwendet werden mit Bezug auf die detektierten Rufnummern, wobei die zum Erfassen von Information benötigten Daten Nicht-Toninformationen sind; und
die Antwortdaten erzeugt werden durch die ausgewählten Benutzer (1) mit den Mobilkommunikationsgeräten (2) durch Verarbeiten der zum Erfassen von Information benötigten Daten.

6. Das Informationserfassungsverfahren nach Anspruch 5, wobei die Eigenschaftsinformation die Ortsinformation der von den Benutzern (1) verwendeten Mobilkommunikationsgeräten (2) enthält.

7. Das Informationserfassungsverfahren nach Anspruch 5 oder 6 ferner umfassend einen Schritt, um den Benutzern (1) gemäß der Häufigkeit und der Qualität der von den Benutzern (1) erfassten Antwortdaten eine Vorzugsbehandlung zu geben.

8. Das Informationserfassungsverfahren nach einem der Ansprüche 5 bis 7, wobei die zum Erfassen von Information benötigten Daten an die Mobilkommunikationsgeräte (2) durch Emails transferiert werden.

## Revendications

1. Système d'acquisition d'informations (10) pour acquérir des informations demandées à partir de dispositifs de communication mobile (2) employés par des utilisateurs (1) d'un réseau de communication mobile (3) passant par le réseau de communication mobile ; le système d'acquisition d'informations comprenant :
une unité de commande d'informations de comptes (72) qui est configurée pour stocker des informations caractéristiques des utilisateurs (1) ;
une unité de gestion de sélection d'utilisateurs (71) qui est configurée pour recevoir les données requises pour acquérir des informations comprenant les informations caractéristiques à partir d'un dispositif de traitement d'informations (81) utilisé par un client d'acquisition d'informations (8), et pour sélectionner les utilisateurs (1) parmi les utilisateurs (1) mémorisés dans l'unité de commande d'informations de comptes (72) en se référant aux informations caractéristiques ;
un dispositif de stockage d'informations (5) qui est configuré pour acquérir et stocker les données de réponse qui sont générées par les utilisateurs sélectionnés (1) à l'aide des dispositifs de communication mobile (2) ; et
une station de fournisseur d'informations (6) qui est configurée pour compiler les données de réponse stockées dans le dispositif de stockage d'informations (5), et transférer les résultats compilés au dispositif de traitement d'informations (81) ;
**caractérisé en ce que**
l'unité de commande d'informations de comptes (72) est adaptée pour stocker les numéros appelants des dispositifs de communication mobile (2) et les identificateurs du service d'acquisition d'informations de manière à ce qu'ils soient associés aux informations caractéristiques, les identificateurs du service d'acquisition d'informations indiquant si, oui ou non, chacun des utilisateurs (1) a rejoint le système d'acquisition d'informations (10) ;
l'unité de gestion de sélection d'utilisateurs (71) est adaptée pour sélectionner des utilisateurs (1) parmi les utilisateurs (1) qui ont rejoint le système d'acquisition d'informations (10), en se référant aux informations caractéristiques et aux identificateurs du service d'acquisition d'informations, et pour détecter les numéros appelants des dispositifs de communication mobile (2) employés par les utilisateurs sélectionnés (1) ;
le système d'acquisition d'informations (10) comprend en outre un dispositif de transmission d'informations (4) qui est configuré pour transférer les données requises pour acquisition d'informations aux dispositifs de communication mobile (81) employés par les utilisateurs sélectionnés (1) en se référant aux numéros appelants détectés, les données requises pour acquisition d'informations étant des informations non acoustiques ; et
les données de réponse sont générées par les utilisateurs sélectionnés (1) à l'aide des dispositifs de communication mobile (2) en traitant les données requises pour acquisition d'informations.

2. Le système d'acquisition d'informations (10) selon la revendication 1 dans lequel les informations caractéristiques comprennent les informations de localisation des dispositifs de communication mobile (2) employés par les utilisateurs (1).

3. Le système d'acquisition d'informations (10) selon la revendication 1 ou 2, comprenant en outre une unité de gestion de comptes (73) qui est configurée pour donner un traitement préférentiel aux utilisateurs (1) selon la fréquence et la qualité des données de réponse acquises auprès des utilisateurs (1).

4. Le système d'acquisition d'informations (10) selon l'une quelconque des revendications 1 à 3, dans lequel le dispositif de transmission d'informations (4) est adapté à transférer des données requises pour acquisition d'informations aux dispositifs de communication mobile (2) par le biais de courriers électroniques.

5. Un procédé d'acquisition d'informations pour acquérir les informations demandées depuis des dispositifs de communication mobile (2) employés par les utilisateurs (1) d'un réseau de communication mobile (3) passant par le réseau de communication (3), le procédé d'acquisition d'informations comprenant les étapes consistant à :
stocker les informations caractéristiques des utilisateurs (1) dans une unité de commande d'informations de comptes (72) ;
recevoir les données requises pour acquisition d'informations comprenant les informations caractéristiques provenant d'un dispositif de traitement des informations (81) utilisé par un client d'acquisition d'informations (8) ;
sélectionner des utilisateurs (1) parmi les utilisateurs (1) mémorisés dans l'unité de commande d'informations de comptes (72) en se référant aux informations caractéristiques ;
acquérir et stocker les données de réponse qui sont générées par les utilisateurs sélectionnés (1) à l'aide des dispositifs de communication mobile (2) ;
compiler les données de réponse stockées dans un dispositif de stockage d'informations (5) ; et
transférer les résultats compilés au dispositif de traitement des informations (81) ;
**caractérisé en ce que**
dans l'étape de stockage, les numéros appelants des dispositifs de communication mobile (2) et les identificateurs du service d'acquisition d'informations sont associés aux informations caractéristiques, les identificateurs du service d'acquisition d'informations indiquant si, oui ou non, chacun des utilisateurs (1) a rejoint un service d'acquisition d'informations ;
dans l'étape de sélection, des utilisateurs (1) sont sélectionnés parmi les utilisateurs (1) qui ont rejoint le système d'acquisition d'informations (10), en se référant aux informations caractéristiques et aux identificateurs du service d'acquisition d'informations, et les numéros appelants des dispositifs de communication mobile (2) employés par les utilisateurs sélectionnés (1) sont détectés ;
les données requises pour acquisition d'informations sont transférées aux dispositifs de communication mobile (81) utilisés par les utilisateurs sélectionnés en se référant aux numéros appelants détectés, les données requises pour acquisition d'informations étant des informations non acoustiques ; et
les données de réponse sont générées par les utilisateurs sélectionnés (1) à l'aide des dispositifs de communication mobile (2) en traitant les données requises pour acquisition d'informations.

6. Le procédé d'acquisition d'informations selon la revendication 5, dans lequel les informations caractéristiques comprennent des informations de localisation des dispositifs de communication mobile (2) employés par les utilisateurs (1).

7. Le système d'acquisition d'informations selon la revendication 5 ou 6, comprenant en outre une étape qui consiste à donner aux utilisateurs (1) un traitement préférentiel selon la fréquence et la qualité des données de réponse acquises auprès des utilisateurs (1).

8. Le procédé d'acquisition d'informations selon l'une quelconque des revendications 5 à 7, dans lequel les données requises pour acquisition d'informations sont transférées aux dispositifs de communication mobile (2) par le biais de courriers électroniques.
